**Europäisches Patentamt**

**European Patent Office**

**Office européen des brevets**

(11) Veröffentlichungsnummer: **0 213 228**
**B1**

(12) **EUROPÄISCHE PATENTSCHRIFT**

(45) Veröffentlichungstag der Patentschrift:
**29.03.89**

(21) Anmeldenummer: **85111002.3**

(22) Anmeldetag: **31.08.85**

(51) Int. Cl.⁴: **B65G 47/54**

(54) Hubvorrichtung für ein Rollendeck zur Eckumlenkung einer Palette.

(43) Veröffentlichungstag der Anmeldung:
**11.03.87 Patentblatt 87/11**

(45) Bekanntmachung des Hinweises auf die Patenterteilung:
**29.03.89 Patentblatt 89/13**

(84) Benannte Vertragsstaaten:
**AT BE CH DE FR GB IT LI LU NL SE**

(56) Entgegenhaltungen:
**GB-A- 1 018 629**
**US-A- 3 592 325**

(73) Patentinhaber: **CARL SCHENCK AG,**
**Landwehrstrasse 55 Postfach 40 18,**
**D-6100 Darmstadt(DE)**

(72) Erfinder: **Benz, Hermann, Wixhäuser Strasse 26,**
**D-6100 Darmstadt(DE)**
Erfinder: **Walz, Reinhold, Dipl.-Ing.,**
**Carl-Ulrich-Strasse 34, D-6100 Darmstadt(DE)**

(74) Vertreter: **Dallhammer, Herbert, Dipl.-Ing., CARL**
**SCHENCK AG Patentabteilung**
**Postfach 4018 Landwehrstrasse 55,**
**D-6100 Darmstadt(DE)**

ACTORUM AG

## Beschreibung

Die Erfindung betrifft eine Hubvorrichtung für ein Rollendeck zur Eckumlenkung einer Palette, wobei das Rollendeck aus einem Grundrahmen und einem gegen diesen mittels mindestens eines pneumatisch betätigbaren Hubbalgs bewegbaren Hubrahmen besteht, wobei jeder Hubbalg zwischen Grundrahmen und Hubrahmen angeordnet ist, wobei beide Rahmen Rollen für die Auflage einer Palette tragen und am Hubrahmen Hubbegrenzungen vorgesehen sind, wobei jede Hubbegrenzung eine am Grundrahmen angeordnete und mit einem oberen Begrenzer, der am Hubrahmen angeordnet ist, zusammenwirkende Begrenzerzunge aufweist.

Bei der Förderung von Paletten innerhalb von Regallagern ist es erforderlich, sowohl die Paletten allein als auch die mit Stückgütern versehenen Paletten auf engstem Raum in der Ebene um 90° umzulenken. Hierzu werden Rollendecks verwendet, die am Ende einer Rollenbahn angeordnet sind. Das Rollendeck besteht hierbei aus einem Grundrahmen, in dem beispielsweise die Rollen in derselben Förderrichtung angeordnet sind wie die Rollen in der vorhergehenden Rollenbahn. Gegenüber dem Grundrahmen ist nun ein höhenbeweglicher Hubrahmen vorgesehen, dessen Rollen zwischen den Rollen des Grundrahmens abtauchen können. Die Rollenachsen der Rollen im Hubrahmen sind rechtwinklig in derselben Ebene zu den Rollen im Grundrahmen angeordnet. Damit ist es möglich, eine Palette, die ggfs. mit Stückgut belegt ist, in der bisherigen Richtung auf das Rollendeck zu fördern und anschließend durch Anheben des Hubrahmens die Palette in einem rechten Winkel zur bisherigen Förderrichtung auf einer weiteren Rollenbahn, die in einen geringen Niveauunterschied zur ersten Rollenbahn angeordnet ist, weiter zu befördern.

Zum Anheben und Absenken eines derartigen Rollendecks werden bisher Exzenterantriebe oder hydraulische Antriebe verwendet, mit Hilfe derer eine Relativbewegung zwischen Hubrahmen und Grundrahmen durchgeführt werden kann. Bei der Verwendung von Exzentern ist es bei einem Austausch des Exzenters erforderlich, den Hubrahmen vom Grundrahmen zu trennen um die Hubvorrichtung selbst ausbauen zu können. Auch ist eine ständige Wartung der Anlage zwingend erforderlich um einen vorzeitigen Verschleiß zu vermeiden. Bei der Verwendung von hydraulischen Hubvorrichtung ist bei einem Verschleiß der einzelnen Hubvorrichtung ebenfalls der Hubrahmen und der Grundrahmen zu trennen, da für eine exakte Führung der hydraulischen Hubvorrichtung eine feste Verankerung der Vorrichtung, d.h. des Zylinders sowohl im Grundrahmen, als auch im Hubrahmen erforderlich ist. Darüber hinaus ist eine ständige Wartung unumgänglich und es muß zusätzlich mit einem gewissen Überschuß an Hydraulikflüssigkeit gearbeitet werden, um einen vorzeitigen Verschleiß der hydraulischen Hubvorrichtung zu vermeiden. Dadurch ist zwangsläufig ein Verschmutzen eines derartigen Rollendecks durch Hydraulikflüssigkeit gegeben.

Durch die GB-A 1 018 629 ist eine den eingangs genannten Stand der Technik darstellende Veröffentlichung bekannt geworden, bei der jedoch ebenfalls eine Auftrennung zwischen Hubrahmen und Grundrahmen stattfinden muß um ein neues Hubelement einfügen zu können.

Ausgehend hiervon liegt der Erfindung die Aufgabe zugrunde, ohne Trennung des Rollendecks in Grund- und Hubrahmen einen Austausch verschlissener Hubelemente zu bewirken, bei gleichzeitiger Wartungsfreiheit der Hubelemente während des Betriebs. Diese Aufgabe wird mit den erfinderischen Merkmalen des Anspruchs 1 gelöst. Durch Anordnung von vier pneumatisch betätigbaren Hubbälgen, die zwischen dem Grundrahmen und dem Hubrahmen angeordnet sind und durch Anordnung von vier Hubbegrenzungen wird ein eindeutiges Anheben bzw. Absenken des Hubrahmens um ein vorgegebenes Maß gegenüber dem Grundrahmen ermöglicht. Anstelle der vier in den Ecken zwischen Grundrahmen und beweglichem Hubrahmen angeordneten pneumatisch betätigbaren Hubbälgen kann auch ein einziger Hubbalg verwendet werden, wenn dieser im Zentralbereich zwischen Grundrahmen und Hubrahmen angeordnet ist und wenn an allen vier Ecken Hubbegrenzungen vorgesehen sind. Durch Erhöhung des Drucks innerhalb des mindestens einen Hubbalges wird im angehobenen Zustand ein eindeutiges Anliegen des Hubrahmens in den Endstellungen der Hubbegrenzungen sichergestellt. Durch Verwendung von Luft ist eine Umweltbelastung innerhalb einer derartigen Förderstraße nicht gegeben, da auch beim Absenken des Hubrahmens kein Öl in die freie Atmosphäre austritt.

Die in Anspruch 2 unter Schutz gestellten Lenker stellen eine Ausgestaltung des Erfindungsgegenstandes insbesondere bei Verwendung eines einzigen Hubbalges dar; sie bringen jedoch auch im Hinblick auf eine exakte Führung bei Verwendung von vier Hubbälgen an jeder Ecke des Rollendecks eine Verbesserung in der Geradführung, da hierdurch die Hubbegrenzungen nicht als Geradführungen verwendet werden müssen und hierdurch auch ein Verschleiß an den Hubbegrenzungen zufolge wegfallender Führungsaufgabe nicht mehr auftreten kann.

In noch weiterer Ausgestaltung des Erfindungsgegenstandes wird in Anspruch 3 die Anordnung von drei Lenkern am Rollendeck für eine Geradführung vorgeschlagen. Durch diese drei Lenker ist eine eindeutige Führung des Rollendecks während der Hub- und Senkbewegung gewährleistet.

Durch Befestigen der Hubbälge am Grundrahmen gemäß Anspruch 4 wird in Anlagen, bei denen mit einer Erschütterung der kompletten Förderbahnen zu rechnen ist, eine sichere Halterung der Hubbälge erreicht, die bei erschütterungsfreiem Förderbetrieb nicht erforderlich ist. Hierbei reicht es aus, wenn die Auflage im Grundrahmen eben oder leicht tellerförmig am Rande ausgestaltet ist. Hierdurch wird insbesondere beim Austausch von Hubbälgen keinerlei zusätzliche Montagearbeit erforderlich und es kann in kürzester Zeit ein neuer Hubbalg in den Zwischenraum zwischen Grundrahmen und Hubrahmen eingeführt werden, ohne daß die beiden Rahmen getrennt oder zusätzlich unterstützt werden müssen. Erfindungsgemäß wird durch leichtes unter Druck halten, wobei die Bälge das Leergewicht des Hubrahmens noch nicht anheben, eine Selbsthemmung der Bälge zwischen Grundrahmen und Hubrahmen erreicht, ohne daß zusätzliche Verankerungen am Hubrahmen oder Grundrahmen vorgesehen sind. Die Hubbegrenzungen dienen gleichzeitig als Abstützungen für den Hubrahmen auf dem Grundrahmen beim Austausch von Bälgen.

Durch Anordnung der Lenker an einer Konsole in der Mitte zwischen Grundrahmen und Hubrahmen bei halbem Hub, wie in Anspruch 5 unter Schutz gestellt, wird die Kreisbewegung, die das Ende des Lenkers durchführt so klein ausfallen, daß die Längenänderung und damit ein Verschieben der Rollenbahn praktisch nicht auftritt, da diese scheinbare Längenänderung vom Lenker durch elastische Dehnung aufgenommen wird.

Die in Anspruch 6 unter Schutz gestellte Maßnahme, die Länge des Lenkers sehr groß gegenüber der durchzuführenden Hubhöhe des Hubrahmens auszuführen, unterstützt den elastischen Ausgleich wie in Anspruch 5 unter Schutz gestellt.

Um auch empfindliches Gut mit der erfindungsgemäßen Vorrichtung transportieren zu können und um 90° umzulenken, wird gemäß Anspruch 7 eine Gummibelegung der Hubbegrenzungen vorgeschlagen. Durch die erfindungsgemäße Belegung der einzelnen Hubbegrenzungen mit Gummi oder anderem stoßdämmenden Stoff, wie gummiähnlichem Kunststoff, wird das Anfahren der Endlagen durch die Abfederung der Zunge so bedämpft, daß eine Beschädigung der auf den Paletten befindlichen, teilweise empfindlichen Gütern, nicht geschieht. Derartige Dämpfungen sind bei hydraulischem Antrieb oder bei Exzenterantrieb nicht vorhanden.

In der nachfolgenden Zeichnung wird die Erfindung näher erläutert. Es zeigen in schematischer Darstellung:

Fig. 1 ein Rollendeck zur Eckumlenkung im Querschnitt mit einer erfindungsgemäßen Hubvorrichtung
Fig. 2 dasselbe Rollendeck im Längsschnitt
Fig. 3 einen Hubbalg in vergrößertem Maßstab
Fig. 4 eine Hubbegrenzung in vergrößertem Maßstab

Gleiche Bauteile in den einzelnen Figuren werden mit denselben Bezugsziffern bezeichnet.

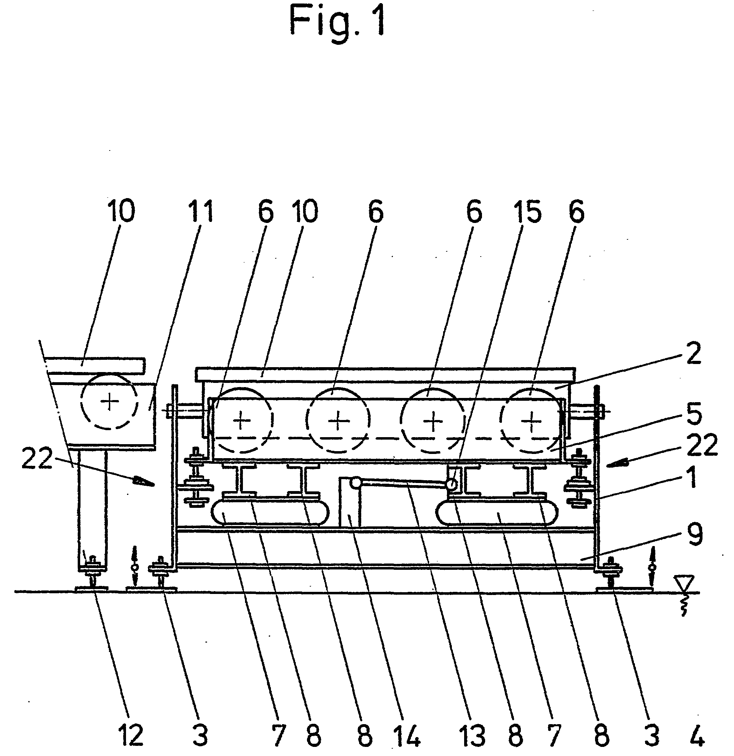

Gemäß Fig. 1 trägt ein Grundrahmen 1 mehrere Rollen 2, die in einer Richtung ausgerichtet sind und die sich über die gesamte Breite des Grundrahmens erstrecken. Der Grundrahmen 2 wird über verstellbare Stützen 3 auf einem Fundament 4, welches auch der Hallenboden sein kann, abgestützt und in horizontaler Richtung ausgerichtet.

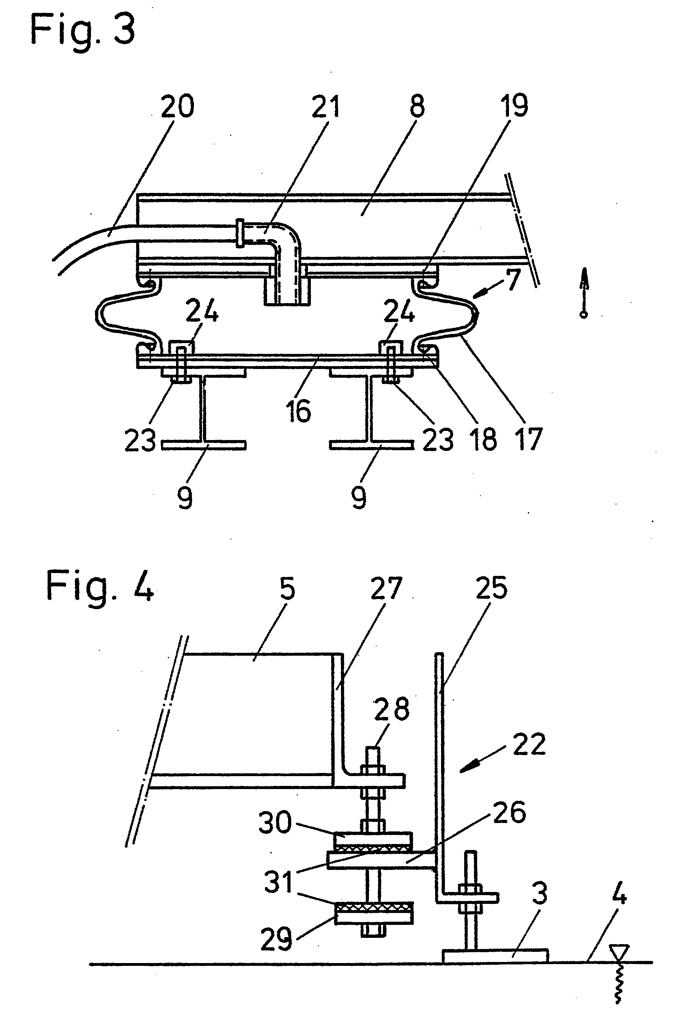

Auf einem Hubrahmen 5 erstrecken sich Reihen kurzer Rollen 6 zwischen den Rollen 2 des Grundrahmens, wobei die Achsen der kurzen Rollen 6 einen rechten Winkel zu den Achsen der Rollen 2 bilden. Pneumatisch betätigbare Hubbälge 7 sind zwischen dem Grundrahmen 1 und dem Hubrahmen 5 angeordnet. Wird in die Hubbälge 7 Druckluft eingebracht (vgl. Fig. 3) wird der Hubrahmen 5 mit Hilfe von Trägern 8 angehoben, die gleichzeitig den Unterbau des Hubrahmens 5 bilden. In derselben Weise bilden weitere Träger 9 den Unterbau des Grundrahmens 1.

Durch Anheben werden die kurzen Rollen 6 über das Niveau der Rollen 2 angehoben und übernehmen somit eine auf den Rollen 2 transportierte Palette 10, so daß diese über eine Rollenbahn 11, ggfs. mit Fördergut versehen, abtransportiert werden kann. Die Rollenbahn 11 verläuft hierbei im rechten Winkel zu der bisherigen Rollenbahnrichtung, die durch die Rollen 2 vorgegeben wurde. Die Rollenbahn 11 ist über Ständer 12 ebenfalls auf dem Fundament 4 ausgerichtet.

Um eine Führung des Hubrahmens 5 bei seiner Vertikalbewegung zu ermöglichen, sind Lenker 13 vorgesehen, die zum einen an Konsolen 14 gelenkig angeordnet sind, die sich auf den weiteren Trägern 9 abstützen; und die sich zum anderen gelenkig an den Trägern 8 in einer Halterung 15 abstützen.

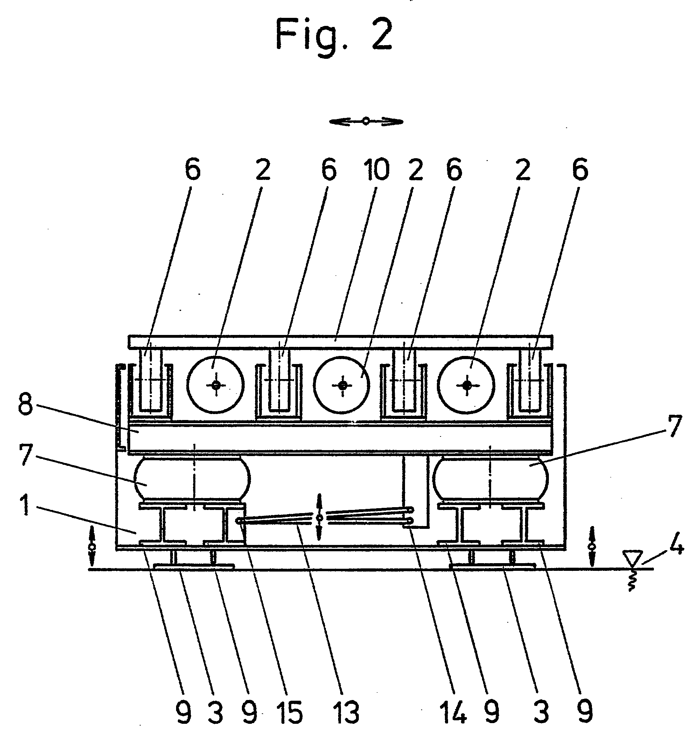

Wie aus den Figuren 1 und 2 ersichtlich, erstrecken sich die Lenker 13 bei halb angehobenem Hubrahmen 5 geradlinig in der Mitte zwischen den Trägern 8 und den weiteren Trägern 9. Damit wird eine symmetrische Führung des Hubrahmens zwischen abgesenkter Stellung und ausgefahrener Stellung erreicht. Den Figuren 1 und 2 ist weiterhin zu entnehmen, daß die Länge der Lenker 13 sehr groß gegenüber der Hubbewegung des Hubrahmens ist; beispielsweise bewegt sich diese Hubbewegung in der Größenordnung von 30 Millimeter, währenddem die Längen der Lenker ca. 2 Meter beträgt.

Durch Anordnen der Hubbälge 7 an den vier Ecken zwischen den weiteren Trägern 9 und den Trägern 8 ist es möglich, Hubbälge mit geringerer pneumatischer Leistung zu verwenden, im Gegensatz bei Verwendung eines einzigen Hubbalgs. Nachdem das Befüllen und Entleeren der Hubbälge mit Druckluft ohne jede Absonderung von Öl geschieht, tritt auch bei häufigem Hubspiel kein Verschmutzen durch umweltschädliches Öl auf.

In Fig. 3 wird in vergrößertem Maßstab ein Hubbalg 7 dargestellt. Der Hubbalg 7 stützt sich auf den weiteren Trägern 9 des Grundrahmens mit einer Platte 16 ab. Der elastische Teil 17 des Hubbalgs 7 ist beispielsweise mittels Schrauben 18 mit der Platte 16 verbunden. Damit ist eine luftdichte Verbindung zwischen Platte 16 und elastischem Teil 17 hergestellt.

Ein metallischer Deckel 19 ist mit dem elastischen Teil 17 des Hubbalgs 7 andererseits mit Schrauben 18 dicht verbunden. Der metallische Deckel 19 stützt sich an den Trägern 8 des Hubrahmens 5 ab. Wird nun über eine Leitung 20 über ein Ventil 21 Druckluft in den Innenraum des Balgs 7 eingebracht, so dehnt sich der Balg in Richtung des Pfeils nach oben aus; hierbei nimmt er den Hubrahmen 7 einschließlich der kurzen Rollen 6 mit nach oben, soweit bis eine Hubbegrenzung (vgl. Fig. 1 und Fig. 4) die Hubbewegung beendet. Über die Leitung 20 wird zur Erreichung eines bestimmten Anpreßdrucks an der Hubbegrenzung 22 noch eine gewisse Überdosis Preßluft in den Innenraum des Hubbalgs 7 eingeführt.

Nach Abtransport der Palette 10 wird entweder durch Öffnen des Ventils 21 die im Hubbalg 7 eingeschlossene Luft ins Freie entlassen, oder zur Vermeidung von Lärmbelästigung durch ausströmendes Gas, die Leitung 20 als Saugleitung für eine Vakuumpumpe benutzt (nicht dargestellt) um das Geräusch ausströmenden Gases zu vermeiden.

Wie bereits offenbart, sind die Hubbälge 7 zufolge eines gewissen Vordrucks zwischen den Trägern 8 und den weiteren Trägern 9 so fest eingespannt, daß ein Verschieben der Hubbälge 7 bei normalem Hubbetrieb nicht eintreten kann. Wird aus Sicherheitsgründen eine Verschraubung 23 zwischen den weiteren Trägern 9 und dem Hubbalg 7 vorgenommen, so ist im Inneren des Hubbalgs 7 in Art einer Hutmutter ein Gewindeträger 24 dicht mit der Platte 16 verschweißt. Damit ist die Gewähr dafür gegeben, daß an dieser Stelle ein Gasaustritt, beim Hub nicht stattfinden kann.

In Fig. 4 ist die Hubbegrenzung 22 in vergrößertem Maßstab dargestellt. An jedem der vier Ecken ist an einem Winkelblech 25 eine Begrenzerzunge 26 angeordnet. Das Winkelblech stützt sich an den weiteren Trägern 9 ab und ist beispielsweise mit diesen verschweißt oder verschraubt. An den Trägern 8 ist eine Lasche 27 angeordnet, die einen Schraubbolzen 28 trägt. Der Schraubbolzen 28 ist mittels Schrauben fest mit der Lasche 27 verbunden. Weiterhin trägt der Schraubbolzen einen einstellbaren oberen Begrenzer 29 zur Begrenzung des Hubes nach oben und einen unteren Begrenzer 30 zur Begrenzung der unteren Lage des Hubrahmens.

Schlägt der obere Begrenzer 29 an die Begrenzerzunge 26 an, wird der Hub in einer genau definierten Höhe zum Stillstand gebracht, so daß eine 90°-Verschiebung der Palette 10 durchgeführt werden kann. Der untere Begrenzer 30 verhindert, daß der Hubrahmen nur von den Hubbälgen getragen werden muß. Würden lediglich die Hubbälge den Hubrahmen tragen, wäre ein einfacher Austausch von Hubbälgen nicht möglich; es müßten zusätzliche Stützkonstruktionen zwischen den Träger 8 und den weiteren Trägern 9 bei einem Austausch eines Balgs vorgesehen werden. Im vorliegenden Fall der Erfindung übernimmt der untere Begrenzer 30 gleichzeitig zusammen mit der Begrenzerzunge 26 die Stützfunktion für den Hubrahmen bei einem Austausch eines Balgs. Wie bereits ausgeführt, sind an den vier Ecken eines derartigen Rollgangs, der aus rechtwinklig zueinander, gegeneinander anhebbaren Rollen 2 und kurzen Rollen 6 besteht, Bälge angeordnet.

In Fig. 4 ist darüber hinaus jeweils die der Begrenzerzunge zuweisende Ebene des oberen und des unteren Begrenzers mit einer Gummi- oder Kunststoffschicht 31 versehen, um eine Dämpfung beim Hub- und Senkvorgang des Hubrahmens zu bewirken.

**Patentansprüche**

1. Hubvorrichtung für ein Rollendeck zur Eckumlenkung einer Palette, wobei das Rollendeck aus einem Grundrahmen (1) und einem gegen diesen mittels mindestens eines pneumatisch betätigbaren Hubbalgs (7) bewegbaren Hubrahmen besteht, wobei jeder Hubbalg zwischen Grundrahmen (1) und Hubrahmen angeordnet ist, wobei beide Rahmen (1, 5) Rollen (2, 6) für die Auflage einer Palette (10) tragen und am Hubrahmen Hubbegrenzungen (22) vorgesehen sind, wobei jede Hubbegrenzung eine am Grundrahmen (1) angeordnete und mit einem oberen Begrenzer (29), der am Hubrahmen (5) angeordnet ist, zusammenwirkende Begrenzerzunge (26) aufweist, dadurch gekennzeichnet, daß jede Hubbegrenzung zusätzlich einen unteren Begrenzer (30) aufweist, mit dem die Begrenzerzunge (26) zusammenwirkt und der zusammen mit der Begrenzerzunge (26) die Stützfunktion für den Hubrahmen übernimmt bei einem Austausch eines Balgs, daß die Zahl der Hubbälge entweder 1 oder 4 ist, und daß die Zahl der Hubbegrenzungen 4 ist.

2. Hubvorrichtung nach Anspruch 1, dadurch gekennzeichnet, daß am Grundrahmen (1) gelenkige, angeordnete Lenker (13) vorgesehen sind und daß der Hubrahmen (5) Halterungen (15) für die gelenkige Aufnahme der Lenker (13) trägt.

3. Hubvorrichtung nach Anspruch 2, dadurch gekennzeichnet, daß an jeder Längsseite des Rollendecks und an einer Querseite des Rollendecks ein Lenker (13) vorgesehen ist und daß die Hubbälge (7) an den vier Ecken des Rollendecks angeordnet sind.

4. Hubvorrichtung nach einem der vorhergehenden Ansprüche, dadurch gekennzeichnet, daß die Hubbälge (7) am Grundrahmen (1) verankert sind.

5. Hubvorrichtung nach Anspruch 2, dadurch gekennzeichnet, daß jeder Lenker (13) an einer mit dem Grundrahmen (1) verbundenen Konsole (14) angeordnet ist und daß der Lenker bei halbem Hub in der Mitte zwischen weiteren Trägen (9) des Grundrahmens (1) und Trägern (8) des Hubrahmens (5) an der Konsole (14) befestigt ist.

6. Hubvorrichtung nach Anspruch 5, dadurch gekennzeichnet, daß die Länge des Lenkers (13) sehr groß gegenüber dem Hub ist.

7. Hubvorrichtung nach Anspruch 1, dadurch gekennzeichnet, daß die Begrenzer (29, 30) an ihrer, der Begrenzerzunge gegenüberliegenden Seite Dämmeinrichtungen tragen.

**Revendications**

1. Dispositif de levage pour une plateforme à rouleaux permettant le changement de direction d'une palette, la plateforme à rouleaux étant constituée par un bâti (1) et par un cadre de levage pouvant être déplacé contre ce dernier au moyen d'au moins un soufflet de levage (7) actionnable pneumatiquement, chaque soufflet de levage étant disposé entre le bâti (1) et le cadre de levage, le bâti et le cadre de levage (1, 5) portant des rouleaux (2, 6) pour soutenir une palette (10), et des moyens de limitation de course (22) étant prévus sur le cadre de levage, chaque moyen de limitation de course comportant une languette de limitation (26) disposée sur le bâti (1) et coopérant avec un limiteur supérieur (29) disposé sur le cadre de levage (5), caractérisé en ce que chaque moyen de limitation de course comporte en plus un limiteur inférieur (30) coopérant avec la languette de limitation (26) et assurant avec la languette de limitation (26) le rôle de soutien pour le cadre de levage lors du remplacement d'un soufflet, en ce que le nombre de soufflets de levage est un ou quatre et en ce que le nombre des moyens de limitation de course est quatre.

2. Dispositif de levage selon la revendication 1, caractérisé en ce qu'on prévoit des bras (13) articulés sur le bâti (1) et en ce que le cadre de levage (5) comporte des axes fixes (15) pour l'articulation des bras (13).

3. Dispositif de levage selon la revendication 2, caractérisé en ce qu'on prévoit sur chaque côté longitudinal de la plateforme à rouleaux et sur un côté transversal de cette plateforme à rouleaux un bras (13) et en ce que les soufflets de levage (7) sont disposés aux quatre angles de la plateforme à rouleaux.

4. Dispositif de levage selon l'une des revendications précédentes caractérisé en ce que les soufflets de levage (7) sont ancrés sur le bâti (1).

5. Dispositif de levage selon la revendication 2, caractérisé en ce que le bras (13) est disposé sur une console (14) relié au bâti (1) et en ce que le bras, à mi course de levage est articulé, au milieu entre les autres poutres (9) du bâti et les poutres (8) du cadre de levage (5), sur la console (14).

6. Dispositif de levage selon la revendication 5, caractérisé en ce que la longueur du bras (13) est très grande par rapport à la course de levage.

7. Dispositif de levage selon la revendication 1, caractérisé en ce que les limiteurs (29, 30) portent des dispositifs d'amortissement sur leur côté faisant face à la languette de limitation.

## Claims

1. A lift device for a roller array for guiding a pallet around corners, wherein the roller array consists of a chassis (1) and a lift frame which can be moved relative to it by means of at least one pneumatically operated lifting bellows (7), wherein each liftig bellows is arranged between the chassis (1) and the lift frame, wherein both frames (1, 5) are equipped with rollers (2, 6) for receiving a pallet (10) and lift stops (22) are fitted on the lift frame and wherein each lift stop comprises a limit tab (26) which is arranged on the chassis (1) and which works in conjunction with an upper limiter device (29) which is arranged on the lifting frame (5), characterised in that each lift stop also has a lower limiter (30) which acts in conjunction with the limit tab (26), and wich, in conjunction with the limit tab (26), performs the support function of the lift frame in the evene of replacement of a bellows, wherein the number of lift bellows is either 1 or 4 and wherein the number of lift limiters is 4.

2. Lift device according to Claim 1, characterised in that articulated connecting rods (13) which are arranged on the chassis (1) are provided and that lift frame (5) is equipped with mountings (15) for pivoting pick-up of the connecting rods (13).

3. Lift device according to Claim 2, characterised in that on each longitudinal side of the roller array and on one transverse side of the roller array there is provided a connecting rod (13) and that the lifting bellows (7) are arranged at the four corners of the roller array.

4. Lift device according to one of the preceding claims, characterised in that the lifting bellows (7) are mounted on the chassis (1).

5. Lift device according to Claim 2, characterised in that each connecting rod (13) is arranged on a bracket (14) which is connected with the chassis (1) and that the connecting rod, at the halfway-lift point, is attached between other girders (9) of the chassis (1) and girders (8) of the lifting frame (5) on the brackets (14).

6. Lift device according to Claim 5, characterised in that the connecting rod (13) is very long in relation to the lift travel.

7. Lift device according to Claim 1, characterised in that the limiters (29, 30) have blocking devices on their sides opposite to the limit tabs.

# Fig. 1

# Fig. 2

# Fig. 3

# Fig. 4